Europäisches Patentamt

European Patent Office

Office européen des brevets

(11) Publication number: **0 235 379 B1**

## EUROPEAN PATENT SPECIFICATION

(45) Date of publication of patent specification: **27.05.92**    (51) Int. Cl.⁵: **G06F 9/46**

(21) Application number: **86117315.1**

(22) Date of filing: **12.12.86**

(54) **Virtual terminal monitored mode.**

(30) Priority: **17.01.86 US 820453**

(43) Date of publication of application:
**09.09.87 Bulletin 87/37**

(45) Publication of the grant of the patent:
**27.05.92 Bulletin 92/22**

(84) Designated Contracting States:
**DE FR GB IT**

(56) References cited:
**EP-A- 0 114 357**

**1979 PROCEEDINGS OF THE 7TH SYMPOSIUM ON OPERATING SYSTEM PRINCIPLES,
pages 86-97, ACM, New York, US; K.A. LANTZ
et al.: "Virtual terminal management in a
multiple process environment"**

**CONTROL ENGINEERING, vol. 23, no. 11, 2nd
edition, October 1985, New York, US; R.
CROWDER: "The MAP specification"**

**M.J. BACH: "The design of the unix operat-
ing system" 1986, pages 325-329, Bell Tele-
phone Labs., Prentice-Hall, London, GB;**

**The Peter Norton Programmer's Guide to the**

**IBM PC", NORTON P., Microsoft Press, Wash-
ington, US, 1985, page 17**

(73) Proprietor: **International Business Machines
Corporation
Old Orchard Road
Armonk, N.Y. 10504(US)**

(72) Inventor: **Fatahalian, Farhad Haji
1712 Chincoteaque Way
Round Rock Texas 78681(US)**
Inventor: **Halliday, Larry Arnold
11411 Santa Cruz Drive
Austin Texas 78759(US)**
Inventor: **Nguyen, Khoa Dang
11200 Morning Glory Trail
Austin Texas 78750(US)**

(74) Representative: **Killgren, Neil Arthur
IBM United Kingdom Limited Intellectual
Property Department Hursley Park
Winchester Hampshire SO21 2JN(GB)**

## Description

This invention relates to data processing systems and more particularly to the control of the display hardware of a data processing system.

A typical data processing system is made up of layers. One of the layers is an operating system such as an UNIX* operating system, although it could be any other operating system, also. The next layer is called a virtual machine interface which is a logical layer. All of the commands of the operating system that go to devices must go through this virtual machine interface. Below the virtual machine interface layer is a subsystem called a virtual terminal subsystem. The virtual terminal subsystem is responsible for managing all of the hardware devices such as the keyboard, locator, tablet, sound device, and all of the displays, whether in character (alphanumeric) mode or all points addressable (APA) mode.

Generally, alphanumeric displays can only display text characters. However, in all points addressable mode, characters and graphics are supported. For data processing systems that support graphics, the costs are higher than if just text processing is supported.

It is prior known in the art to assign several virtual terminals simultaneously to parts of a physical output display device. See for example, 1979 PROCEEDINGS OF THE 7TH SYMPOSIUM ON OPERATING SYSTEM PRINCIPLES, pages 86-97, ACM; "Virtual terminal management in a multiple process environment" by K A Lantz at al. It also prior known in the act to bypass layers of an operating system in order to be able to carry out operations faster. See for example, CONTROL ENGINEERING, Vol 23, No 11, October 1985; "The MAP specification" by R Crowder. However, none of them discloses the invention of the present application.

The following describes the general flow through these layers when a command is sent from an application program through a system to produce output on a display. In order to send a command to display either graphics or characters on the display, the operating system causes a command to go through the virtual machine interface. While in the virtual machine interface layer the command is captured and reformatted into queue elements. From there the command is sent to the virtual terminal subsystem. The virtual terminal subsystem intercepts the command and determines the type of command. Next, the virtual terminal subsystem sends the command to the display.

Since the command to display has to go through all of these layers prior to reaching the display, the system performance is degraded. Going through these layers lowers the response time of the system. For example, if an application program utilizes a mouse for cursor movement on the display screen, there may be a significant delay between the mouse movement and the cursor repositioning on the screen of the output display device. Ideally, these two movements should be essentially simultaneous.

It is an object of this invention to improve the response time between a command to display in an application program and the output of the hardware devices in a data processing system environment.

In the data processing system of this invention, the virtual terminal subsystem operates in two modes. One mode is called a keyboard/send receive (KSR) mode, and the other mode is called the monitored mode. The KSR mode is used primarily for displaying text on the display. The commands going to a virtual terminal in KSR mode, originate from the application program and go through every layer of the system in order to get to the display.

Monitored mode is designed to give application programs, especially graphic applications, running on the operating system a direct output path to the display hardware, and a shortened input path for input devices. The virtual terminal subsystem is circumvented in this mode. In this way performance is increased since the layering is removed between the application program and the hardware in the system of this invention.

In monitored mode, a buffer is defined for storing the input data from the input device. The application program accesses this buffer at any time and without knowledge from the virtual terminal subsystem. The application then takes this data and directly outputs the data to the output display.

The invention, which is defined in the attached claims, is described in detail below with reference to the drawings, of which;

Fig. 1 shows the layers in a data processing system.

Fig. 2 shows the path a command to display takes in KSR mode.

Fig. 3 shows type path a command to display takes in monitored mode.

Fig. 4 is a flow chart of the sequential events when a new terminal is opened in monitored mode.

Fig. 5 is a flow chart of the sequential events when a new terminal is opened in monitored mode and then changed to KSR mode on the same terminal.

Fig. 6 is a flow chart of the sequential events when a new terminal is opened in monitored mode and then the virtual terminal is closed.

Fig. 7 is a flow chart of the sequential events during a hot keying operation between two terminals in monitored mode without a time-out condition.

Fig. 8 is a flow chart of the sequential events during a hot keying operation between two terminals in monitored mode with a time-out condition.

Fig. 9 is a flow chart of the sequential events when two terminals are opened in KSR and monitored mode, and then the terminal in monitored mode is changed to KSR mode while it is in the inactive state.

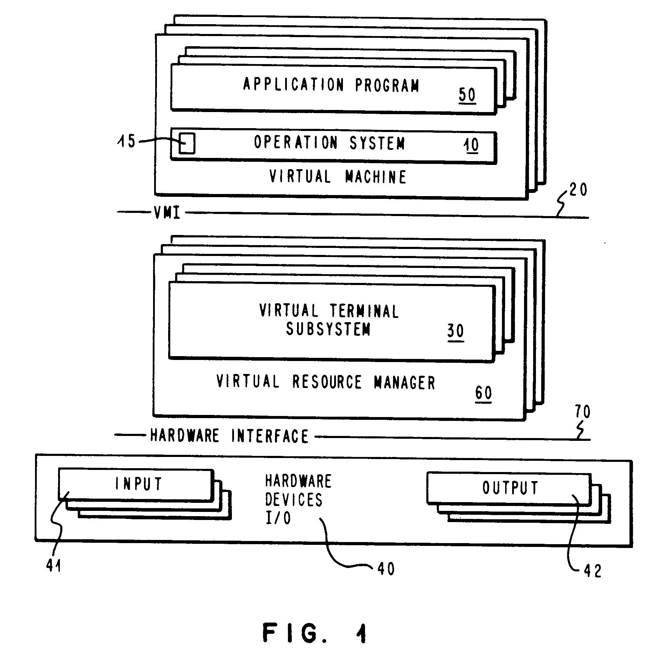

In Fig. 1, the various layers in a data processing system environment are shown as the application program 50 which runs on the operating system 10, the virtual machine interface (VMI) layer 20 which is a logical layer, and the virtual terminal subsystem 30 which manages all of the hardware devices 40. The hardware devices 40 may be any number of, and any combination of, but not limited to, the following input 41 and output 42 devices: a keyboard 41, a mouse 41, a tablet 41, a sound device 42 and displays 42. The displays 42 may also be virtual displays that are shared among the virtual terminal.

In the data processing system of this invention, the virtual terminal subsystem operates in two modes. One mode is called a KSR mode, and the other mode is called the monitor mode. The KSR mode is used primarily for displaying text on the display. It is an ANSI type interface handling ASCII codes. No graphics can be done through the KSR mode. It is only used for displaying characters. Additionally, it is a very slow interface since the commands going to a KSR virtual terminal originate from the application program, and go through every layer of the system in order to get to the display. As a result, performance in this mode is degraded.

The second mode is called monitored mode. The monitored mode supports applications which interact directly with the hardware refresh buffer of the displays, whether it is in character or all point addressable (APA) arrangement, and bypasses the virtual terminal subsystem for output to the display device.

In monitored mode the input devices 41 have their inputs routed through the virtual terminal subsystem 30 to the application program 50. The applications using the monitor mode have an option of defining a circular buffer 15 in the operating system's 10 memory space. The virtual terminal subsystem receives an interrupt from the input devices and deposits the data directly into the input buffer 15. The virtual terminal subsystem does not generate an interrupt to the application program unless it is the first time the data is deposited into the circular buffer 15.

If the application program does not choose to define a circular buffer 15, the virtual terminal subsystem 30 gets an interrupt from the input devices 41 and uses an interrupt path to send the data by. The interrupt path requires queueing interface management which involves communications between the various layers of the communication system such as the operating system 10, the virtual machine interface 20, and the virtual terminal subsystem 30. The application program thereby is subject to the two to three layers of queuing in the operating system 10, and the virtual terminal subsystem 30.

Therefor, if the application program 50 defines the circular buffer 15, queuing overhead is eliminated. In this way, if the application program 50 is trying to track the input from a keyboard, mouse, or a tablet, the application program 50 can track it much faster. As a result, the input data will be echoed to the display at a faster rate.

In the data processing system of this invention, the key element with respect to handling inputs from input devices lies in the ability for the application program to define a circular buffer which is managed by the application program and the virtual terminal subsystem.

The structure of the circular buffer is as follows. It requires a status area which is located in the first 32 bytes of the buffer. The status area contains an offset pointer for the virtual terminal subsystem and an offset pointer for the operating system. The offset pointers are used to put data into the buffer and to remove data from the buffer.

The size of the buffer ring 15 is variable. Preferably it should be at least 34 bytes and preferably no larger than 64,000 bytes. The buffer ring is defined after the system goes into the monitored mode which will be discussed later.

The discussion above has defined the input path, i.e. how the input devices get routed to the operating system. In summary, the data from the input devices, such as when a locator is moved on a display screen, goes to the virtual terminal subsystem. The virtual terminal subsystem deposits the data into the buffer ring. Once the data is in the buffer ring, the application program can remove the data from the buffer ring at any time.

For the output path, the virtual terminal subsystem is isolated. The virtual terminal subsystem has no knowledge of what the application program is doing. With the virtual terminal subsystem out of the communication path, system performance is enhanced since many communication layers in the virtual resource manager are avoided. The virtual resource manager, which contains the virtual terminal subsystem is bounded by the layer above called the virtual machine interface, and the hardware devices.

During monitor mode, when the application 50 is drawing a picture on a display 42, the data is sent directly from the application 50 to the display 42. The virtual terminal subsystem has no knowledge of this direct data transfer.

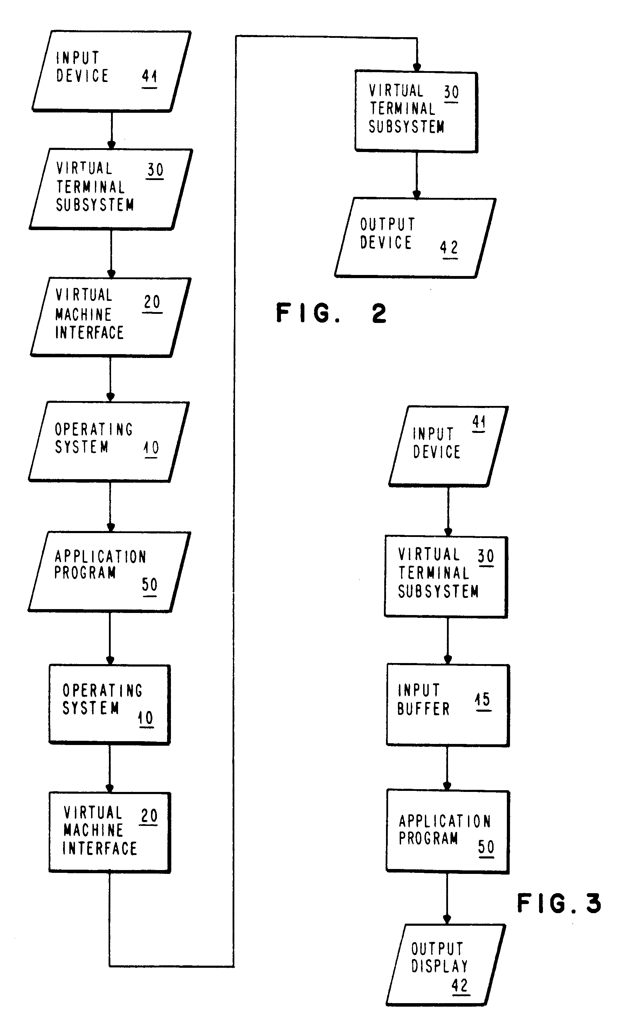

The differences between the KSR and monitored modes as discussed above is best illustrated in Figs. 2 and 3. Fig. 2 shows the path a command to display takes in KSR mode. First the data is received from an input device 41 and sent to the operating system 10 via the virtual terminal subsystem 30 and virtual machine interface 20. The application 50 accesses the input data from the operating system 10, and determines the corresponding output. Then the operating system 10 generates a command to display and sends it to the virtual machine interface 20. The command to display goes through the virtual terminal subsystem 30 to the output device 42.

In contrast, Fig. 3 shows the path a command to display takes in monitored mode. The virtual terminal subsystem 30 receives the data from the input device 41 and deposits that data into an input buffer 15. Once the data is in the input data 15, the application 50 can access that data at any time, and without the knowledge of the virtual terminal subsystem that it is doing so. From there, the application 50 sends the data from the input buffer 15 directly to the output display 42.

In monitored mode the virtual terminal subsystem is bypassed, and has no knowledge of the activity between the application and the output device. Therefore, the applications using this mode must maintain their own data presentation space, participate, and facilitate transitions among virtual terminals.

Applications using monitored mode are also responsible for all input data tracking (keyboard, mouse, tablet, lighted program function keys, and dials). The applications can specify the format protocol of keyboard input data that can best suit its processing requirements. The protocol modes may be set to cause keystroke data to be converted into ASCII characters, control sequences, or to be returned as key positions, status, and scan codes. Applications are also responsible for echoing the keyboard and locator inputs.

In general monitored mode will give the application the flexibility of controlling the display hardware, optimizing the movement of data between the virtual terminal subsystem and the application, and improving the performance of the system significantly by removing several layers of software between the application and the display device.

Description of Operation

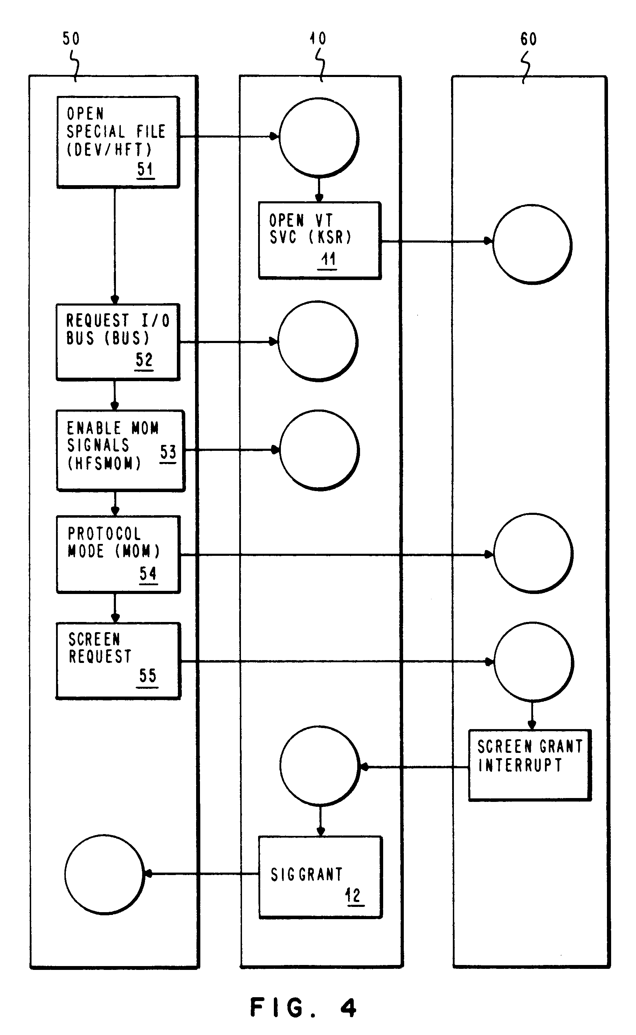

Figs. 4-9 illustrate the application's operation of the KSR mode and the monitor mode. Although, any operating system may be utilized, the operation is described in reference to a UNIX operating system.

Fig. 4 illustrates the steps needed for an application 50 to open a new virtual terminal in monitor mode. The communication between the application 50, the operating system 10, and the virtual resource manager 60 during these steps are also illustrated.

The first activity an application 50 has to do is open a special file which is shown as step 51. The special file is DEV/HFT. This step causes a UNIX HFT driver to send a open virtual terminal SVC command 11 to the virtual resource manager 60. This causes a virtual terminal to be opened in KSR mode. If the application chooses to run in monitor mode, it must access the I/O bus. Thus, step 52 requests the bus using the BUS command. Next, the application 50 must enable the monitored mode (MOM) signals, step 53, which are received from the virtual terminal subsystems. Then, step 54, the PROTOCOL MODE command from the application 50 to the virtual terminal subsystem 30 in the virtual resources manager 60 changes the mode from KSR to monitor mode. Step 55 is a screen request command that is sent from the application 50 to the virtual terminal subsystem 30 to define the monitored mode input buffer, and gives the application the ownership of the display.

This screen request command 55 and the previous protocol command 54 puts the terminal into monitor mode, and also gives the application the opportunity to either define or not define a buffer ring. Whether or not the buffer ring is defined, the screen request, step 55, must be sent out to the virtual terminal 30. At this point the virtual terminal is in monitored mode, and the application 50 will receive a signal grant 12 from the virtual terminal subsystem. This tells the application that the application has complete control of the display adapter that is attached to the virtual terminal. From this point on, the application can display whatever it chooses on the display of the virtual terminal.

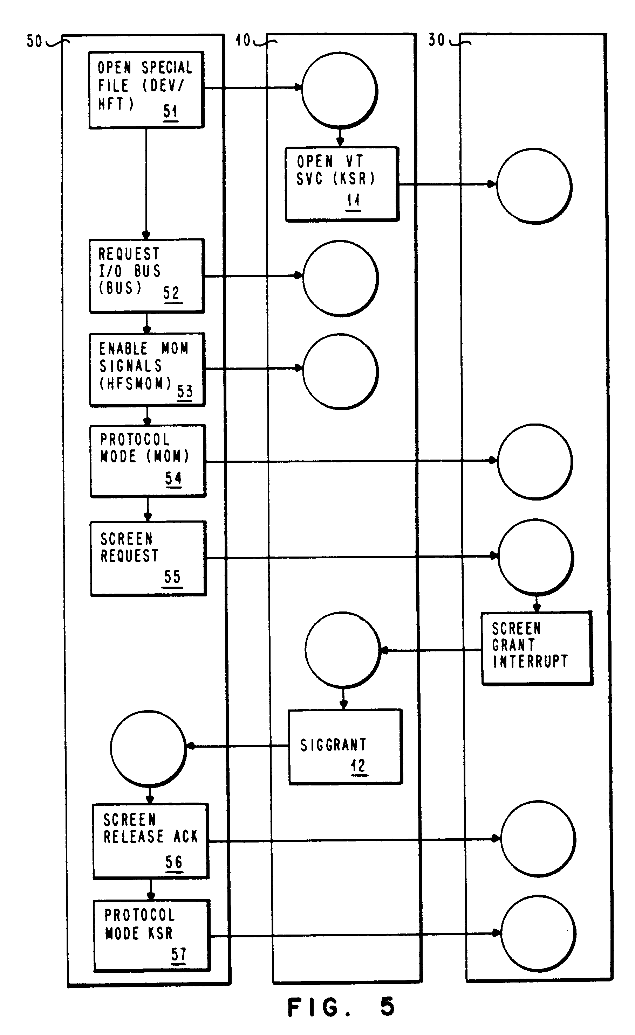

Fig. 5 illustrates the steps in opening a new terminal in monitored mode and then changing back to KSR mode on the same terminal. The steps shown in Fig. 5 include all the sequence of events in Fig. 4, i.e., opening a special file 51, requesting an I/O bus 52, enabling the monitoring mode signals 53, sending a protocol mode 54 to put the virtual terminal in monitor mode, and requesting a screen 55. After the signal grant 12 is received by the application 50, the terminal is in monitored mode. If the application desires to put the terminal in KSR mode, the application must send the command called screen release acknowledge (SCREEN RELEASE ACK), step 56, to the virtual terminal subsystem. Step 56 causes the virtual terminal to get ready to get out of monitored mode. The application 50 must then send a protocol mode, step 57, which changes the virtual terminal from monitored mode to KSR mode.

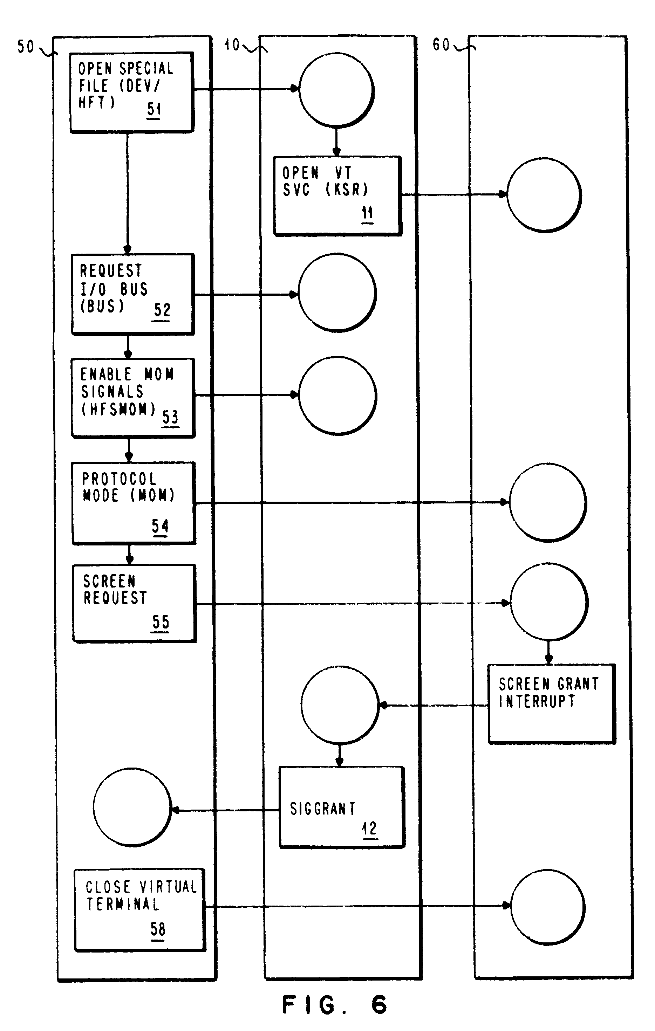

Fig. 6 illustrates the situation where a new virtual terminal is opened in monitored mode and then the virtual terminal is closed. Again the sequence of events are the same as in Fig. 4, i.e., opening a special file 51, requesting an I/O bus 52, enabling the monitoring mode signals 53, sending a protocol mode 54 to put the virtual terminal in monitor mode, requesting a screen 55, and processing a signal grant 12. After the signal grant 12 is received by the application 50, the terminal is in monitor mode. At this point, if the application chooses to close the virtual terminal, it may do so by sending a close virtual terminal command, (CLOSE VT) step 58, to the virtual resource manager 60. This removes the virtual terminal from the virtual resource manager process and kills the virtual terminal.

A virtual terminal that is running in the monitor mode can participate in a hot key sequence of the virtual terminal subsystem. Hot keying allows different virtual terminals which are opened to be displayed on the hardware display. The ability for a multiplicity of virtual terminals to share the same hardware display is further explained in "A Virtual Terminal Subsystem", EP-A-0 229 336 having priority date January 17, 1986; and which is hereby incorporated by reference.

The action key on the keyboard, if activated, will cause a virtual terminal screen to appear on the hardware display. If the action key is activated again, the next virtual terminal screen will be displayed. This process is repeated with each activation of the action key. Once the key has been activated enough times such that each virtual terminal screen has appeared on the hardware display, the next activation of the action key will cause the virtual terminal screen that was first displayed to be displayed again. Thus continuous scrolling of the virtual terminal screens on the hardware display can take place with repeated activations of the action key on the keyboard.

Hot keying allows the various virtual terminal screens to be accessed on the hardware display without the need to save each screen of a virtual terminal before removing it from the hardware display. The hot keying sequence restores a previous virtual terminal screen to the hardware display automatically upon the activation of the action key on the keyboard. In this way, the application does not have to save the data of each virtual terminal that is opened.

However, if a virtual terminal is running in monitor mode, and is participating in the hot key operation, it has to save its data before it relinquishes the control of the display.

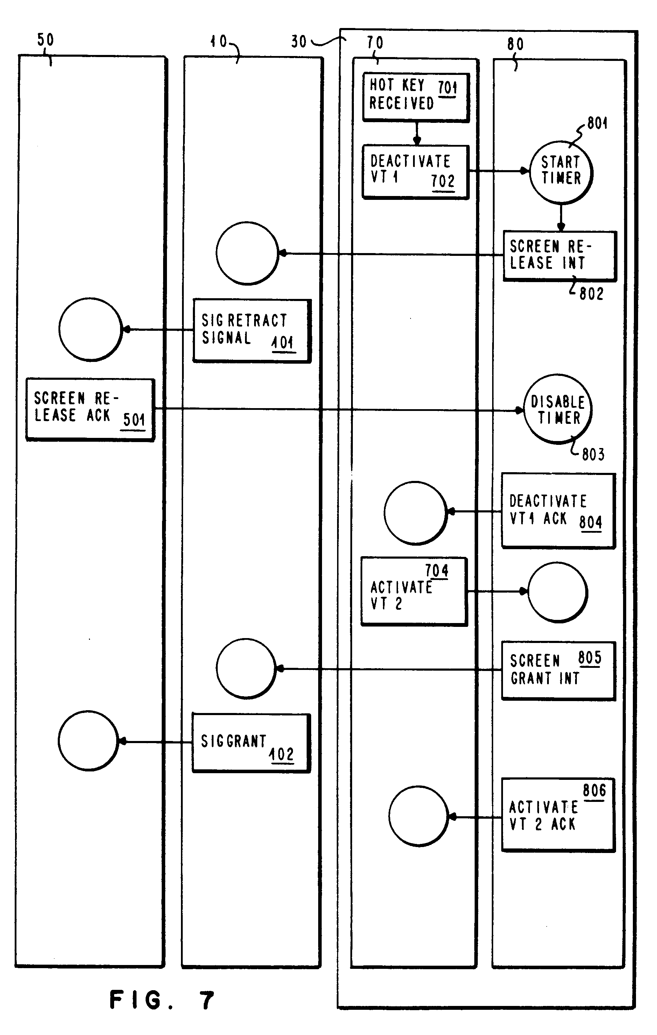

Fig. 7 illustrates the case where two terminals are opened, and they are both in monitored mode. If the action key is activated on the keyboard, the virtual terminal resource manager 70, which is part of the virtual terminal subsystem 30, receives the signal 701. The virtual terminal resource manager 70 sends a signal 702 to deactivate the virtual terminal. This starts the virtual resource manager timer 801 in the virtual terminal mode processor 80 which is part of the virtual terminal subsystem 30. The timer is set for a specified period of time, such as for 30 second.

The application receives a screen release interrupt from the virtual terminal subsystem. In UNIX operating systems, the operating system 10 changes the screen release interrupt 802 to a SIGRETRACT signal 101 and sends that to the application 50. The application actually sees the SIGRETRACT signal. This tells the application that it has a specified period of time, such as 30 seconds, to save all of its data, and to respond to the SIGRETRACT signal 101. To respond to the SIGRETRACT signal 101, the application sends a screen release acknowledge 501 to the virtual terminal subsystem 30. The screen release acknowledge 501 indicates to the virtual terminal subsystem that the application has acknowledged the fact that the present display has to be released, that the application has saved the screen data, and that the application is ready to relinquish the display. Thus the virtual resource manager timer is disabled, step 803.

At this point the virtual terminal subsystem receives the screen release acknowledge. The virtual terminal subsystem then goes through a deactivate 804 and activate 704 process. This process is internal to the virtual terminal subsystem. The application has no knowledge of this process. Activating the second virtual terminal (ACTIVATE VT2) 704, which is in monitor mode, causes its data to be displayed on the hardware display. The application 50 will receive a SIGRANT signal 102 from the virtual terminal subsystem which tells the application running in the second virtual terminal, that it now has the control over the display, and it can be used for the application. As such, the ability of the first terminal to talk to the display has been taken away, and the second terminal has been given the opportunity to come onto the display to run its application.

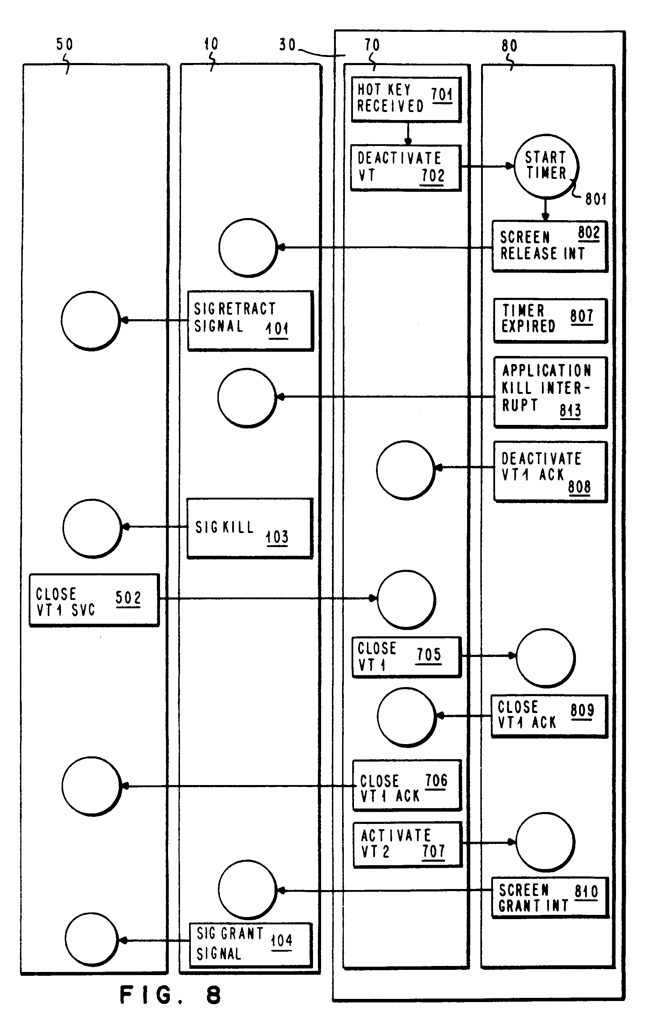

Fig. 8 illustrates the situation where two terminals are in the monitor mode already, and are going to participate in the hot keying operation. However, in this situation, the application does not respond to the SIGRETRACT signal 101 within the designated amount of time. As shown in Fig. 8, the application 50 receives a SIGRETRACT signal 101 from the operating system 10 since the keyboard action key for hot keying was activated, step 701. If the application does not save its data and respond to the signal within a designated time, e.g. 30 seconds, the timer in the virtual terminal subsystem 30 will expire, step 807.

At this time the application will receive a SIGKILL signal 103 from the virtual terminal subsystem. This tells the operating system that the virtual terminal is dead, and that the operating system should close that virtual terminal. The virtual terminal is then removed from the virtual terminal subsystem. Therefore, after the SIGKILL processing 103, that terminal is closed 502. The virtual terminal subsystem will receive a close command. It closes the terminal by removing the process from the virtual terminal subsystem structures, and acknowledging the close 706 to the application 50 and the operating system 10. At this time the first terminal is removed from the virtual terminal subsystem structures.

Since in this example, there is a second virtual terminal, the virtual terminal subsystem knows about this second terminal, and activates 707 this second virtual terminal. Since the second terminal is in monitored mode, a screen grant interrupt will be sent by the virtual terminal subsystem to the operating system, which in turn, sends a SIGGRANT signal to this terminal's application. At this time, this terminal has control of the display hardware.

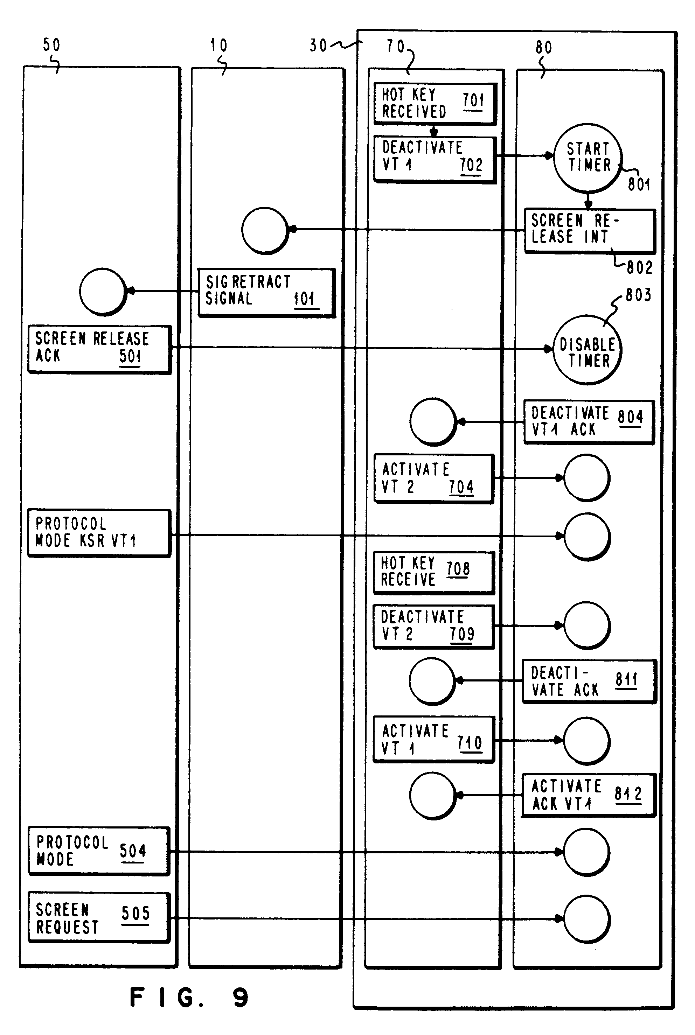

Fig. 9 represents the situation where two terminals are opened in KSR and monitor mode. The terminal in monitor mode is changed to KSR while it is in the inactivate state. This terminal is then reactivated in KSR mode and then its mode is changed to monitored mode.

In this situation, it is important that the application remembers that since the terminal was in monitored mode, and then changed to KSR mode, the virtual terminal subsystem has not retained any information for that monitor mode, Therefore, the application has to define another buffer ring and reset all of its pointers before the switch from KSR to monitored mode can be accomplished. This is true even if a previous circular buffer was defined when the terminal was first in monitored mode and then switched to KSR mode. The circular buffer disappeared when the mode was switched to KSR mode. Therefor, the situation in Fig. 9 illustrates that the protocol mode, step 504, and the screen request SVC 505 have to be sent, one after the other, in that order, every time a terminal is to be put into monitored mode.

**Claims**

1.  A data processing system having an operating system (10) functioning in a virtual machine environment, a virtual machine interface (20), a virtual terminal subsystem (30), at least one input device (41) and at least one display device (42), such that said operating system communicates through said virtual machine interface with said virtual terminal subsystem, characterised in that said data processing system, virtual machine environment and operating system are so arranged that applications programs can route output to the display device (42) in one of two selectable modes, wherein in the first of said two modes output is routed via the said operating system and thereby via said virtual machine interface and said virtual terminal subsystem to said display device, and wherein in the second of said two modes output is routed directly to said display device without the use of operating system commands and without passing through the virtual terminal subsystem, and further arranged that in said first mode input is routed from said input device via said virtual terminal subsystem, virtual machine interface and operating system to said application program and that in said second mode input is routed from said input device via said virtual terminal subsystem into a storage area (15) directly managed by said application thereby affording means for sending, by the application, said received data, in said second mode, from said storage area directly to the display device, circumventing the operating system.

2.  A data processing system as claimed in Claim 1, wherein said storage area (15) is a circular buffer.

3.  A data processing system as claimed in Claim 1 or Claim 2, wherein at least one virtual terminal shares the display device (42).

4.  A method of communication between an application (50) and a display device (42), said application (50) running on a data processing system having an operating system (10) functioning in a virtual machine environment, a virtual machine interface (20), a virtual terminal subsystem (30), at least one input device (41) and at least one display device (42), said method being characterised by the steps of: selecting, by said application, between a first and second mode for routing output from said application (50) to the display device (42), and input from the input device (41) to said application (50); if said first mode is selected, then routing the output via said operating system and thereby via said machine interface and said virtual terminal subsystem to said display device, and similarly routing input from the input device via said virtual terminal subsystem, virtual machine interface and operating system to said application (50); and

if said second mode is selected, then routing the output directly to said display device without the use of operating system commands and without passing through the virtual terminal subsystem, and routing input from said input device via said virtual terminal subsystem into a storage area (15) directly managed by said application.

**Revendications**

1. Système de traitement de données comportant un système d'exploitation (10) fonctionnant dans un environnement de machines virtuelles, un interface de machine virtuelle (20), un sous-système de terminaux virtuels (30), au moins un dispositif d'entrée (41) et au moins un dispositif de visualisation (49), d'une manière telle que ledit système d'exploitation communique par l'intermédiaire dudit interface de machine virtuelle avec ledit sous-système de terminaux virtuels, caractérisé en ce que le système de traitement de données, l'environnement de machines virtuelles et le système d'exploitation sont disposés d'une manière telle que les programmes d'application peuvent acheminer la sortie vers le dispositif de visualisation (42) dans un des deux modes sélectionnables,

dans lequel, dans le premier desdits deux modes, la sortie est acheminée par l'intermédiaire dudit système d'exploitation et de ce fait par l'intermédiaire dudit interface de machine virtuelle et dudit sous-système de terminaux virtuels vers ledit dispositif de visualisation et dans lequel, dans le second desdits deux modes, la sortie est acheminée directement audit dispositif de visualisation sans l'utilisation des ordres du système d'exploitation et sans passer par le sous-système de terminaux virtuels et est de plus disposé en ce que dans ledit premier mode, l'entrée est acheminée depuis ledit dispositif d'entrée par l'intermédiaire dudit sous-système de terminaux virtuels, de l'interface de machine virtuelle et du système d'exploitation vers ledit programme d'application et en ce que dans ledit second mode, l'entrée est acheminée à partir dudit dispositif d'entrée par l'intermédiaire dudit sous-système de terminaux virtuels en une zone mémoire (15) directement gérée par ledit programme d'application procurant de ce fait des moyens pour envoyer, par le programme d'application, lesdites données reçues dans ledit second mode à partir de la zone mémoire directement au dispositif de visualisation, n'utilisant pas de ce fait le système d'exploitation.

2. Système de traitement de données selon la revendication 1, dans lequel ladite zone mémoire (15) est une mémoire tampon circulaire.

3. Système de traitement de données selon la revendication 1 ou la revendication 2, dans lequel au moins un des terminaux virtuels partage le dispositif de visualisation (42).

4. Procédé de communication entre un programme d'application (50) et un dispositif de visualisation (42), ledit programme d'application (50) tournant sur un système de traitement de données comportant un système d'exploitation (10) fonctionnant dans un environnement de machines virtuelles, un interface de machine virtuelle (20), un sous-système de terminaux virtuels (30), au moins un dispositif d'entrée (41) et au moins un dispositif de visualisation (42), ledit procédé étant caractérisé par les étapes consistant à :

sélectionner, par ledit programme d'application, entre un premier et second modes pour acheminer la sortie provenant dudit programme d'application (50) au dispositif de visualisation (42) et l'entrée provenant du dispositif d'entrée (42) audit programme d'application (50) ;

si ledit premier mode est choisi, alors acheminer la sortie par l'intermédiaire dudit système d'exploitation et de ce fait par l'intermédiaire dudit interface de machine et dudit sous-système de terminaux virtuels audit dispositif de visualisation et acheminer de manière similaire l'entrée à partir du dispositif d'entrée par l'intermédiaire dudit sous-système de terminaux virtuels, de l'interface de machine virtuelle et du système d'exploitation vers ledit programme d'application (50) ; et

si le second mode est choisi, acheminer alors la sortie directement vers ledit dispositif de visualisation sans l'utilisation des ordres du système d'exploitation et sans passer par l'intermédiaire du sous-système de terminaux virtuels et acheminer l'entrée provenant du dispositif d'entrée par l'intermédiaire du sous-système de terminaux virtuels dans une zone mémoire (15) directement gérée par ledit programme d'application.

**Patentansprüche**

1. Datenverarbeitungssystem, das aufweist: ein Betriebssystem (10), das in einem virtuellen Maschinenstatus arbeitet, eine Schnittstelle (20) einer virtuellen Maschine, ein Subsystem (30) virtueller Datenstationen, zumindest eine Eingabeeinrichtung (41) und zumindest eine Anzeigeeinrichtung (42) so, daß das Betriebssystem über die Schnittstelle einer virtuellen Maschine mit dem Subsystem virtueller Datenstationen kommuniziert, dadurch gekennzeichnet, daß das Datenverarbeitungssystem, der virtuelle Maschinenstatus und das Betriebssystem so eingerichtet sind, daß Anwendungsprogramme eine Ausgabe an die Anzeigeeinrichtung (42) in einem zweier auswählbarer Modi leiten können,

bei welchem in dem ersten der zwei Modi eine Ausgabe über das Betriebssystem und dadurch über die Schnittstelle einer virtuellen Maschine und das Subsystem virtueller Datenstationen zu der Anzeigeeinrichtung geleitet wird und bei welchem in dem zweiten der zwei Modi eine Ausgabe unmittelbar zu der Anzeigeeinrichtung ohne die Verwendung von Betriebssystembefehlen und ohne Durchlaufen durch das Subsystem virtueller Datenstationen geleitet wird und ferner eingerichtet sind, daß in dem ersten Modus eine Eingabe aus der Eingabeeinrichtung über das Subsystem virtueller Datenstationen, die Schnittstelle einer virtuellen Maschine und das Betriebssystem zu dem Anwendungsprogramm geleitet wird und daß in dem zweiten Modus eine Eingabe aus der Eingabeeinrichtung über das Subsystem virtueller Datenstationen in einen von der Anwendung unmittelbar verwalteten Speicherbereich (15) geleitet wird, wodurch Mittel bereitgestellt werden, um die empfangenen Daten mittels der Anwendung in dem zweiten Modus aus dem Speicherbereich unmittelbar zu der Anzeigeeinrichtung, unter Umgehen des Betriebssystems zu senden.

2. Datenverarbeitungssystem nach Anspruch 1, bei welchem der Speicherbereich (15) ein Ringpuffer ist.

3. Datenverarbeitungssystem nach Anspruch 1 oder 2, bei welchem zumindest eine virtuelle Datenstation die Anzeigeeinrichtung (42) teilt.

4. Verfahren zum Kommunizieren zwischen einer Anwendung (50) und einer Anzeigeeinrichtung (42), wobei die Anwendung (50) auf einem Datenverarbeitungssystem läuft, das aufweist: ein Betriebssystem (10), das in einem virtuellen Maschinenstatus arbeitet, eine Schnittstelle (20) einer virtuellen Maschine, ein Subsystem (30) virtueller Datenstationen, zumindest eine Eingabeeinrichtung (41) und zumindest eine Anzeigeeinrichtung (42), wobei das Verfahren durch die folgenden Schritte gekennzeichnet ist:

Auswählen mittels der Anwendung zwischen einem ersten und einem zweiten Modus, um eine Ausgabe aus der Anwendung (50) zu der Anzeigeeinrichtung (42) und eine Eingabe aus der Eingabeeinrichtung (41) zu der Anwendung (50) zu leiten,

falls der erste Modus ausgewählt wird, Leiten der Ausgabe über das Betriebssystem und dadurch über die Maschinenschnittstelle und das Subsystem virtueller Datenstationen zu der Anzeigeeinrichtung und gleichermaßen Leiten einer Eingabe aus der Eingabeeinrichtung über das Subsystem virtueller Datenstationen, die Schnittstelle einer virtuellen Maschine und das Betriebssystem zu der Anwendung (50) und

falls der zweite Modus ausgewählt ist, Leiten der Ausgabe unmittelbar zu der Anzeigeeinrichtung ohne die Verwendung von Betriebssystembefehlen und ohne über das Subsystem virtueller Datenstationen zu laufen und Leiten einer Eingabe aus der Eingabeeinrichtung über das Subsystem virtueller Datenstationen in einen unmittelbar von der Anwendung verwalteten Speicherbereich (15).

**FIG. 1**

FIG. 2

FIG. 3

50         10         60

OPEN
SPECIAL FILE
(DEV/HFT)
51

OPEN VT
SVC (KSR)
11

REQUEST I/O
BUS (BUS)
52

ENABLE MOM
SIGNALS 53
(HFSMOM)

PROTOCOL
MODE (MOM)
54

SCREEN
REQUEST
55

SCREEN GRANT
INTERRUPT

SIG GRANT
12

# FIG. 4

FIG. 5

50

10

60

OPEN SPECIAL
FILE (DEV/
HFT) 51

OPEN VT
SVC (KSR)
11

REQUEST
I/O BUS
(BUS) 52

ENABLE MOM
SIGNALS
(HFSMOM) 53

PROTOCOL
MODE (MOM)
54

SCREEN
REQUEST
55

SCREEN GRANT
INTERRUPT

SIGGRANT
12

CLOSE VIRTUAL
TERMINAL
58

FIG. 6

| 50 | 10 | 30 | 70 | 80 |
|----|----|----|----|----|

HOT KEY _701_
RECEIVED

DEACTIVATE
VT 1 _702_

START
TIMER 804

SCREEN RE-
LEASE INT
802

SIG RETRACT
SIGNAL _101_

SCREEN RE-
LEASE ACK _501_

DISABLE
TIMER

803

DEACTIVATE
VT 1 ACK _804_

704
ACTIVATE
VT 2

SCREEN _805_
GRANT INT

SIG GRANT
_102_

ACTIVATE _806_
VT 2 ACK

# FIG. 7

FIG. 8

**FIG. 9**